# EUROPEAN PATENT APPLICATION

(11) **EP 4 685 473 A1**
(43) Date of publication of application: **28.01.2026**
(21) Application number: 24774882.5
(22) Date of filing: 15.03.2024
(51) Int. Cl.: G01N 27/404, G01N 27/416

(54) **ELECTROCHEMICAL OXYGEN SENSOR**

(30) Priority: 23.03.2023 JP 2023046121
(71) Applicant: Maxell, Ltd., Kyoto 618-8525 (JP)
(72) Inventor: WATANABE, Mitsutoshi, Otokuni-gun, Kyoto 618-8525 (JP); KITAZAWA, Naohisa, Otokuni-gun, Kyoto 618-8525 (JP)
(74) Representative: Diehl & Partner
(86) International application number: PCT/JP2024/010370
(87) International publication number: WO 2024/195746

(57) **Abstract**

Provided is an electrochemical oxygen sensor capable of maintaining output voltage stability and favorable vibration resistance for a long period of time. The electrochemical oxygen sensor according to the present invention includes: a positive electrode; a negative electrode; an electrolyte solution constituted by an aqueous solution containing an electrolyte; and an exterior body accommodating the positive electrode, the negative electrode, and the electrolyte solution, and the electrolyte solution contains a water-soluble thickener made of a semi-synthetic polymer or a synthetic polymer at a concentration of 0.1% by mass or more and 4% by mass or less. The electrolyte solution preferably contains a polymer containing a constitutional unit represented by a formula (1) below as the thickener. In the formula (1), R¹ represents H or CH₃, R² represents OH, OM, or NH₂, and the M is an alkali metal element.

## Description

### Technical Field

The present invention relates to an electrochemical oxygen sensor capable of maintaining output voltage stability and favorable vibration resistance for a long period of time.

### Background Art

Electrochemical cells each having a positive electrode constituted by an air electrode containing a catalyst, a negative electrode, and an electrolyte solution constituted by an aqueous solution are used in air batteries, oxygen sensors for detecting oxygen concentrations in various environments, and the like.

In order to improve properties of such electrochemical cells, various studies have been conducted not only on the positive electrode and the negative electrode but also on the electrolyte solution. For example, Patent Document 1 proposes an air battery in which the electrolyte (electrolyte solution) contains an acrylamide polymer as a thickener to suppress deterioration of its properties due to dissipation of an electrolyte solution solvent through air holes provided in an exterior body to allow oxygen to enter the battery.

Patent Document 2 proposes that in order to ensure stable operation of a sensor even when mechanical vibration or impact is applied to the sensor from the outside, a water-absorbing and swelling member that has absorbed the electrolyte solution is sealed inside a container, and the swelling pressure of the member maintains favorable electrical contact between the positive electrode and the current collector.

### Prior Art Documents

### Patent Document

[Patent Document 1] JP 2021-144872A
[Patent Document 2] JP H6-109694A

### Disclosure of Invention

### Problem to be Solved by the Invention

However, the inventors of the present invention have revealed through studies that, even when an electrochemical oxygen sensor has a configuration such as that described in Patent Document 2, when the electrochemical oxygen sensor is, for example, used or stored for a long period of time after the production thereof, the output voltage fluctuates significantly when mechanical vibration or impact is applied to the sensor from the outside.

Therefore, there is a demand for electrochemical oxygen sensors having characteristics to achieve at least a certain level of output voltage even after a long period of time has passed since their production, and to obtain stable measurement results even when mechanical vibration or impact is applied thereto from the outside.

The present invention has been accomplished in view of the circumstances described above, and it is an object of the present invention to provide an electrochemical oxygen sensor capable of maintaining output voltage stability and favorable vibration resistance for a long period of time.

### Means for Solving Problem

An electrochemical oxygen sensor according to the present invention (may be simply referred to as "oxygen sensor" hereinafter) includes: a positive electrode; a negative electrode; an electrolyte solution constituted by an aqueous solution containing an electrolyte; and an exterior body accommodating the positive electrode, the negative electrode, and the electrolyte solution, and the electrolyte solution contains a water-soluble thickener made of a semi-synthetic polymer or a synthetic polymer at a concentration of 0.1% by mass or more and 4% by mass or less.

### Effects of the Invention

According to the present invention, it is possible to provide an electrochemical oxygen sensor capable of maintaining output voltage stability and favorable vibration resistance for a long period of time.

### Brief Description of Drawings

[FIG. 1] FIG. 1 is a cross-sectional view schematically showing one example of an electrochemical oxygen sensor according to the present invention.
[FIG. 2] FIG. 2 is a diagram illustrating a state of a conventional electrochemical oxygen sensor after a long period of time has passed since its production.
[FIG. 3] FIG. 3 is a graph showing results of evaluations of output voltage maintainability in electrochemical oxygen sensors of Examples 1 to 3 and Comparative Examples 1 and 2 during an accelerated test.
[FIG. 4] FIG. 4 is a graph showing results of evaluations of output voltage maintainability in electrochemical oxygen sensors of Examples 1, 4 to 8 and Comparative Examples 1 and 3 during the accelerated test.

### Description of the Invention

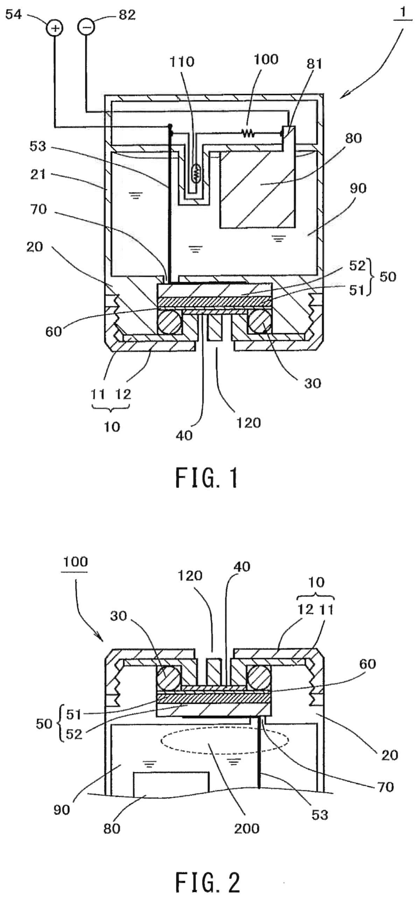

FIG. 1 is a cross-sectional view schematically showing one example of an electrochemical oxygen sensor according to the present invention. An electrochemical oxygen sensor 1 shown in FIG. 1 is an example of a galvanic cell type oxygen sensor according to one embodiment of an electrochemical oxygen sensor of the present invention.

The oxygen sensor 1 shown in FIG. 1 has a positive electrode 50, a negative electrode 80, and an electrolyte solution 90 in a tubular container 20 having a bottom. The container 20 is constituted by a container main body 21 that contains the electrolyte solution 90, a protective film 40 in an opening portion of the container main body 21, and a sealing lid 10 for fixing a barrier membrane 60 and the positive electrode 50. The sealing lid 10 is constituted by a first sealing lid (inner lid) 11, and a second sealing lid (outer lid) 12 for fixing the first sealing lid 11, and has a through hole 120 for taking oxygen into the oxygen sensor 1, and is attached to the container main body 21 via an O-ring 30.

The negative electrode 80 is arranged inside the container main body 21 that stores the electrolyte solution 90 in a state in which the negative electrode 80 is immersed in the electrolyte solution 90, and the negative electrode 80 is provided with a lead portion 81. Also, the positive electrode 50 is composed by stacking a catalyst layer (catalytic electrode) 51 and a positive electrode current collector 52, and the lead wire 53 is attached to the positive electrode current collector 52. Further, a lower portion of the container main body 21 of the container 20 that stores the electrolyte solution 90 is provided with a bore 70 to allow the passage of the lead wire 53 attached to the positive electrode current collector 52. Also, although not shown in FIG. 1, the lower portion of the container main body 21 is also provided with a bore for supplying the electrolyte solution to the positive electrode 50, separately from the bore 70.

A correction resistor 100 and a temperature compensation thermistor 110 are connected in series between the lead portion 81 of the negative electrode 80 and the lead wire 53 attached to the positive electrode current collector 52, and are housed in the container main body 21. Also, a negative electrode terminal 82 is connected to the lead portion 81 of the negative electrode 80, and a positive electrode terminal 54 is connected to the lead wire 53 attached to the positive electrode current collector 52, and these terminals are led out to the outside of the container main body 21.

The barrier membrane 60, which selectively allows oxygen to pass therethrough and limits the amount of oxygen passing therethrough to become commensurate with a cell reaction, is arranged on an outer surface side of the positive electrode 50, and oxygen passing through the through hole 120 provided in the sealing lid 10 is introduced into the positive electrode 50 through the barrier membrane 60. Also, a protective film 40 for preventing dirt, dust, water, or the like from adhering to the barrier membrane 60 is arranged on the outer surface side of the barrier membrane 60, and is fixed by the first sealing lid 11.

That is, the first sealing lid 11 functions as a pressing end plate for pressing the protective film 40, the barrier membrane 60, and the positive electrode 50. In the oxygen sensor 1 shown in FIG. 1, a threaded portion is formed on an inner circumferential portion of the second sealing lid 12 to be screwed onto a threaded portion formed on an outer circumferential portion of the opening portion of the container main body 21. Then, the first sealing lid 11 is pressed against the container main body 21 via the O-ring 30 by screwing the sealing lid 10 on, and thus, the protective film 40, the barrier membrane 60, and the positive electrode 50 can be fixed to the container main body 21 in a state in which airtightness and liquid tightness are maintained.

As described above, after a long period of time has passed since the production of the oxygen sensor, the output voltage fluctuates significantly when mechanical vibration or impact is applied to the sensor from the outside. It is presumed that the reasons for this are as follows.

FIG. 2 is a diagram illustrating a state of a conventional electrochemical oxygen sensor after a long period of time has passed since its production. An oxygen sensor 100 is shown upside down compared to the oxygen sensor 1 shown in FIG. 1, presuming that the sensor will be used under conditions of strong vibration.

In the oxygen sensor 100, gases such as water vapor and air can pass through a barrier membrane 60 for taking oxygen into the positive electrode 50. Therefore, water, which is the solvent of the electrolyte solution 90, gradually evaporates and dissipates to the outside of the oxygen sensor 100 through a through hole 120. As a result, air enters the inside of a container main body 21 of the oxygen sensor 100 that stores the electrolyte solution 90. Air that has entered the inside of the container main body 21 initially forms small bubbles in the electrolyte solution 90. As the amount of air that has entered increases, the small bubbles gather together when the oxygen sensor 100 vibrates to form a large bubble 200 as indicated by a dotted line in FIG. 2. When the oxygen sensor 100 is placed in a state where the positive electrode 50 is positioned at an upper portion of the oxygen sensor, the bubble 200 is positioned at an upper portion of the electrolyte solution 90 as shown in FIG. 2. When the oxygen sensor 100 vibrates in this state, part of the bubble 200 will come into contact with the positive electrode 50, generating a voltage different from the output voltage corresponding to the actual oxygen concentration. As a result, the output voltage of the oxygen sensor 100 fluctuates greatly.

When not much time has passed since the production of the oxygen sensor 100, a small amount of air has entered the container main body and thus no large bubbles are formed. Therefore, even when the oxygen sensor is placed in the state shown in FIG. 2 and vibration is applied thereto, bubbles that have formed inside the container main body 21 do not come into contact with the positive electrode and thus the output voltage does not fluctuate. Therefore, it is conceivable that, even when an oxygen sensor stably outputs voltage when subjected to vibration or impact shortly after production, the output voltage may fluctuate greatly when the oxygen sensor is subjected to vibration or impact after a long period of time after production.

In view of this, studies have been conducted, regarding the prevention of dissipation of moisture in the electrolyte solution to the outside by increasing the viscosity of the electrolyte solution in the electrochemical oxygen sensor according to the present invention by adding a thickener thereto, and the prevention of fluctuations in the output voltage caused by contact with the positive electrode by making it difficult for bubbles generated in the container main body to move.

However, the inventors of the present invention revealed through studies that thickening the electrolyte solution makes it possible to maintain favorable vibration resistance for a long period of time, but depending on the type and content of the thickener, problems, such as a decrease in output voltage or an inability to maintain a favorable output voltage for a long period of time, may arise.

The inventors of the present invention conducted further studies and found that, when the electrolyte solution contains a specific polymer as a thickener in a suitable range, the electrochemical oxygen sensor can maintain excellent vibration resistance for a long period of time and can also maintain a favorable output voltage for a long period of time, thereby completing the present invention.

An electrochemical oxygen sensor according to the present invention includes: a positive electrode; a negative electrode; an electrolyte solution constituted by an aqueous solution containing an electrolyte; and an exterior body accommodating the positive electrode, the negative electrode, and the electrolyte solution. The electrolyte solution contains a water-soluble thickener made of a semi-synthetic polymer or a synthetic polymer at a concentration of 0.1% by mass or more and 4% by mass or less.

As water-soluble thickeners, natural polysaccharides (such as xanthan gum and glucomannan (konjac extract)), semi-synthetic polymers (such as carboxymethyl cellulose (CMC) and hydroxyethyl cellulose (HEC)), synthetic polymers (such as polyacrylic acid (PAA), polyvinyl alcohol (PVA), polyvinylpyrrolidone (PVP), polyacrylamide (PAM), poly-N-vinylacetamide (PNVA), and polyoxyethylene (PEO)), and the like are known. It was found that by adding a certain amount of any thickener to the electrolyte solution to thicken the electrolyte solution, fluctuations in output voltage when the oxygen sensor is subjected to vibration or impact can be suppressed, and favorable vibration resistance can be maintained for a long period of time.

On the other hand, it was also revealed that when an electrolyte solution containing, in a specific concentration, synthetic polymers, which are artificially synthesized polymeric materials, or semi-synthetic polymers, which are chemically processed polymeric materials obtained from natural sources, is used, an output voltage equivalent to that obtained when an electrolyte solution containing no thickener is used can be obtained, and a favorable output voltage can be maintained for a long period of time, whereas when an electrolyte solution containing natural polysaccharides is used, problems arise such as a decrease in output voltage and a shortened period for which a favorable output voltage can be maintained.

Although a specific cause is unknown, it is presumed that the above problems may be related to the fact that natural polysaccharides form physical gels when they absorb water, whereas semi-synthetic polymers and synthetic polymers form chemical gels.

Note that semi-synthetic polymers and synthetic polymers used as water-soluble thickeners also include salts such as sodium salts and ammonium salts.

Among synthetic polymers, a polymer containing a constitutional unit represented by the following formula (1) is preferably used as the thickener, since a favorable output voltage can be maintained for a longer period of time.

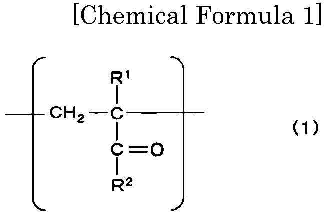

In the formula (1), R¹ represents H or CH₃, R² represents OH, OM, or NH₂, and the M is an alkali metal element.

Specifically, the polymer containing the constitutional unit represented by the formula (1) is a (meth)acrylamide polymer, a (meth)acrylic acid polymer, or a polymer of an alkali metal salt of (meth)acrylic acid. Note that the term "(meth)acrylamide" refers to acrylamide or methacrylamide, and the term "(meth)acrylic acid" refers to acrylic acid or methacrylic acid.

Examples of the (meth)acrylamide polymer include homopolymers or copolymers containing (meth)acrylamide as a monomer, which are soluble in water that is the solvent for the electrolyte solution. Considering the solubility in the electrolyte solution, a homopolymer or copolymer of acrylamide is preferable. In the case of an acrylamide copolymer, the proportion of acrylamide-derived constitutional units in all constitutional units (all repeating units derived from monomers forming the acrylamide copolymer) is preferably, for example, 60 mol% or more.

In the case of the acrylamide copolymer, examples of copolymer components that form copolymers together with acrylamide include cationic polymerizable monomers and anionic polymerizable monomers.

Examples of cationic polymerizable monomers include (meth)acrylic acid ester derivatives having a tertiary amino group, (meth)acrylamide derivatives having a tertiary amino group, and quaternized products obtained by quaternizing a tertiary amino group of diallylamine derivatives and the like.

Examples of the (meth)acrylic acid ester derivative having a tertiary amino group include dialkyl amidoethyl (meth)acrylates such as dimethylaminoethyl (meth)acrylate and dialkyl amidopropyl (meth)acrylate.

Examples of the (meth)acrylamide derivative having a tertiary amino group include dialkyl amidoalkyl (meth)acrylamides such as dialkylaminopropyl (meth)acrylamide (dimethylaminopropyl (meth)acrylamide) and (meth)acrylamide-3-methylbutyldimethylamine.

Examples of the quaternary diallylamine derivatives include diallyldimethylammonium chloride, diallyldiethylammonium chloride, diallyldibutylammonium chloride, diallylmethylethylammonium chloride, diallyldimethylammonium bromide, and diallylethylammonium bromide.

Examples of anionic polymerizable monomers include α,β-unsaturated carboxylic acids and sulfonic acids having a vinyl group.

Examples of the α,β-unsaturated carboxylic acids include α,β-unsaturated monocarboxylic acids (such as acrylic acid, methacrylic acid, and crotonic acid), α,β-unsaturated dicarboxylic acids (such as maleic acid, fumaric acid, itaconic acid, and citraconic acid), and salts thereof (such as alkali metal salts (sodium salts, potassium salts, and the like), and ammonium salts).

Examples of sulfonic acids having a vinyl group include vinyl sulfonic acid, styrene sulfonic acid, 2-acrylamido-2-methylpropanesulfonic acid, and salts thereof (such as alkali metal salts (sodium salts, potassium salts, and the like), and ammonium salts).

Also, the acrylamide copolymer may contain only one type or two or more types of constitutional units based on the monomers listed above as the examples. The acrylamide copolymer may contain a constitutional unit based on other polymerizable monomers in addition to the constitutional units based on the monomers listed above as the examples.

Among such acrylamide polymers, anionic acrylamide polymers are preferable because they favorably function to enhance effects of the present invention, and copolymers of acrylamide and alkali metal salts (such as sodium salt and potassium salt) of acrylic acid are more preferable. It is possible to use, as such acrylamide polymers, commercially available products such as "SANFLOC AH-200P (product name)" (acrylamide-sodium acrylate copolymer) available from Sanyo Chemical Industries, Ltd., and "ACCOFLOC" and "DIAFLOC" (both product names) available from MT AquaPolymer, Inc.

Examples of the (meth)acrylic acid polymer include homopolymers or copolymers containing (meth)acrylic acid as a monomer, which are soluble in water that is the solvent for the electrolyte solution. Furthermore, examples of polymers of alkali metal salts of (meth)acrylic acid include homopolymers or copolymers containing (meth)acrylic acid as a monomer, in which carboxyl groups in some or all of the constitutional units derived from (meth)acrylic acid have been converted into alkali metal salts through neutralization (partially or completely neutralized homopolymers or copolymers containing (meth)acrylic acid as a monomer), these polymers being soluble in water that is the solvent for the electrolyte solution.

Specific examples of the (meth)acrylic acid polymers include homopolymers of (meth)acrylic acid (polyacrylic acid, polymethacrylic acid); copolymers of acrylic acid and methacrylic acid; and copolymers of (meth)acrylic acid and a monomer such as acrylamide, acrylonitrile, or N-vinylacetamide.

Specific examples of the alkali metal salts of (meth)acrylic acid include products obtained by partially or completely neutralizing polyacrylic acid; products obtained by partially or completely neutralizing polymethacrylic acid; products obtained by partially or completely neutralizing a copolymer of acrylic acid and methacrylic acid; and products obtained by partially or completely neutralizing a copolymer of (meth)acrylic acid and a monomer such as acrylamide, acrylonitrile, or N-vinylacetamide.

Among these thickeners, acrylamide polymers are preferable, anionic acrylamide polymers are more preferable, and copolymers of acrylamide and alkali metal salts of acrylic acid are even more preferable.

Furthermore, amide compounds other than acrylamide polymers and copolymers, such as poly-N-vinylacetamide can also be preferably used.

From the viewpoint of favorably ensuring the above effects obtained by using the thickener, the concentration of the thickener in the electrolyte solution is 0.1% by mass or more, preferably 0.5% by mass or more, and more preferably 1% by mass or more. On the other hand, if the amount of the thickener in the electrolyte solution is too large, the viscosity of the electrolyte solution will be significantly increased, causing problems such as a decrease in output voltage and a shortened period during which a favorable output voltage can be maintained. Therefore, the concentration of the thickener in the electrolyte solution is set to 4% by mass or less, preferably 2.5% by mass or less, and more preferably 2% by mass or less.

The method for adding the thickener to the electrolyte solution is not particularly limited, and the electrolyte solution containing the thickener may be prepared before the oxygen sensor is assembled, or the thickener and the electrolyte solution may be introduced in an exterior body that stores the electrolyte solution, and the thickener may be dissolved in the electrolyte solution inside the exterior body.

An electrolyte solution constituted by an aqueous solution containing an electrolyte is used for the electrolyte solution of the oxygen sensor, and there is no particular limitation on the electrolyte to be added, and various acids (organic acids and inorganic acids), alkali metal salts, salts thereof, and the likes can be used. Specific examples of the electrolyte solution include acidic aqueous solutions containing carboxylic acid or a salt thereof, such as an aqueous solution containing acetic acid, potassium acetate, and lead acetate, and an aqueous solution containing citric acid and a citric acid salt (alkali metal salt or the like); and alkaline aqueous solutions such as an aqueous solution of sodium hydride and an aqueous solution of potassium hydroxide ; and weakly alkaline aqueous solutions containing cesium carbonate and cesium hydrogen carbonate.

Further, an aqueous solution that constitutes the electrolyte solution may contain various organic acids, inorganic acids, and alkalis as needed for the purpose of pH adjustment.

Note that, from the viewpoint of achieving an extension of the service life of the oxygen sensor, it is preferable to use an aqueous solution containing a chelating agent for the electrolyte solution, and the electrolyte may be a chelating agent. It is presumed that a chelating agent has the action of chelating the constituent metal of the negative electrode and dissolving the chelated metal in the electrolyte solution (referred to as a "chelating action" hereinafter), and it is conceivable that the chelating action may contribute to an extension of the service life of the oxygen sensor.

A "chelating agent" used in this specification has a molecule (including ions) having multiple coordination sites (coordinating atoms) that are in a coordinate bond with a metal ion, and forms a complex (complexation) with the metal ion, thereby stabilizing the metal ion. A chelating agent can be added to an electrolyte solution in the form of an acid, which generates the above molecules in a solvent that constitutes the electrolyte solution, or a salt thereof, or the like. Therefore, acids having a single coordination site (coordinating atom), such as phosphoric acid, acetic acid, and carbonic acid that have weak complexing power, and salts thereof, are not included in the "chelating agent" used in this specification.

Chelating agents usually have chelating action and pH buffer capacity (the capacity to keep the pH of a solution substantially constant even when a small amount of acid or base is added). Specific examples thereof include succinic acid, fumaric acid, maleic acid, citric acid, tartaric acid, glutaric acid, adipic acid, malic acid, malonic acid, aspartic acid, glutamic acid, and ascorbic acid, and salts thereof, and these may be used alone or in combination of two or more.

From the viewpoint of enhancing the chelating action, it is more preferable to use, as a chelating agent, a substance with high solubility in water, and specifically, citric acid, tartaric acid, and glutamic acid, and salts thereof. In particular, citric acid and salts thereof are highly soluble in water (citric acid: 73 g/100 ml (25°C), trisodium citrate: 71 g/100 ml (25°C), tripotassium citrate: 167 g/100 ml (25°C)). Also, citric acid has a large number of dissociable hydrogen atoms, and has multiple pH values where the pH buffer capacity is exhibited (pKa₁=3.13, pKa₂=4.75, pKa₃=6.40). Therefore, citric acid is more preferably used. Thus, when citric acid is used as a chelating agent, citric acid is highly soluble in water, and the pH buffer capacity thereof is enhanced, thus further extending the service life of the oxygen sensor.

The pH of the electrolyte solution is preferably 3 or higher and more preferably 4 or higher, in order to prevent corrosion of the negative electrode material. On the other hand, the pH of the electrolyte solution is preferably 9 or lower and more preferably 8 or lower, in order to prevent carbon dioxide from dissolving in the electrolyte solution to cause deterioration in the characteristics.

The concentration of the chelating agent in the electrolyte solution is preferably 2.3 mol/L or more, and more preferably 2.5 mol/L or more, and particularly preferably 2.7 mol/L or more, for example.

Note that, when a metal that is dissolved in the electrolyte solution and originates from the negative electrode reaches a saturation concentration, an oxide of the metal is generated and the negative electrode becomes inactive, which may shorten the service life of the oxygen sensor. Even if a chelating agent is added to the electrolyte solution, the effect of extending the service life of the oxygen sensor may be limited. In this case, it is preferable to increase the molar concentration of the chelating agent in the electrolyte solution by further adding ammonia to the electrolyte solution, and thereby it is possible to delay the saturation of the metal that is dissolved in the electrolyte solution and originates from the negative electrode, and further extend the service life of the oxygen sensor.

The concentration of ammonia in the electrolyte solution is 0.01 mol/L or higher in order to facilitate the above-mentioned action of ammonia, preferably 0.1 mol/L or higher and more preferably 1 mol/L or higher in order to further facilitate the action. Further, although the upper limit of the concentration of ammonia in the electrolyte solution is not particularly specified, ammonia is a compound specified in Appendix 2 of the "Poisonous and Deleterious Substances Control Law" in Japan, and thus, the concentration of ammonia in the electrolyte solution is preferably set to less than 10% by mass from the viewpoint of safety.

As shown in FIG. 1, for example, an electrode constituted by a catalytic electrode and a positive electrode current collector is used for the positive electrode of the oxygen sensor, for example. Although the constituent material of the catalytic electrode is not particularly limited as long as a current can be generated through electrochemical reduction of oxygen on the positive electrode, metal elements such as gold (Au), silver (Ag), platinum (Pt), and titanium (Ti), and alloys thereof are suitably used. The catalytic electrode may be made of a single material or may be a stacked body made of different materials, or may be a functionally gradient material whose composition changes in the thickness direction.

The negative electrode of the oxygen sensor is not particularly limited, and can be made of, for example, lead (Pb), zinc (Zn), antimony (Sb), and tin (Sn), or an alloy thereof.

Examples of the Sn alloy include Sn-Ag alloys, Sn-Cu alloys, Sn-Ag-Cu alloys, and Sn-Sb alloys from the viewpoint of corrosion resistance, and alloys containing metal elements such as Al, Bi, Fe, Mg, Na, Zn, Ca, Ge, In, Ni, and Co may also be used.

As shown in FIG. 1, a barrier membrane to control the entry of oxygen is preferably disposed on an outer surface of the positive electrode of the oxygen sensor so as not to allow an excess amount of oxygen to reach the catalytic electrode. Preferably, a barrier membrane selectively allows oxygen to pass therethrough and also can limit the amount of oxygen gas passing therethrough. The material and the thickness of the barrier membrane are not particularly limited, and a fluoropolymer such as polytetrafluoroethylene or a tetrafluoroethylene-hexafluoropropylene copolymer, a polyolefin such as polyethylene, or the like is typically used. It is possible to use porous membranes, non-porous membranes, and further, membranes having holes provided with capillary tubes, which are called capillary-type membranes, as a barrier membrane.

Furthermore, as shown in FIG. 1, in order to protect the barrier membrane, it is preferable to dispose a protective film constituted by a porous resin film on the barrier membrane. The material and thickness of the protective film are not particularly limited as long as the protective film has a function of preventing dirt, dust, water, or the like from adhering to the barrier membrane, and a function of allowing air (including oxygen) to pass therethrough, and a fluoropolymer such as polytetrafluoroethylene is typically used.

The container main body 21 of the oxygen sensor 1 can be constituted by acrylonitrile-butadiene-styrene (ABS) resin, for example. Also, the sealing lid 10 (the first sealing lid 11 and the second sealing lid 12) arranged on the opening portion in the container main body 21 may be constituted by ABS resin, polypropylene, polycarbonate, fluoropolymer, or the like, for example.

Also, the O-ring 30 interposed between the container main body 21 of the container 20 and the sealing lid 10 (the first sealing lid 11) is pressed and deformed by screwing the second sealing lid 12 onto the container main body 21, thereby allowing the airtightness and the liquid tightness of the oxygen sensor 1 to be maintained. The material of the O-ring is not particularly limited, and nitrile rubber, silicone rubber, ethylene-propylene rubber, a fluoropolymer, or the like is typically used.

Although the present invention has been described using, as an example, a galvanic cell type oxygen sensor, which is one embodiment of an electrochemical oxygen sensor according to the present invention, the electrochemical oxygen sensor of the present invention is not limited to the above-described embodiment, and various changes and modifications can be made within the scope of the technical idea of the invention. Also, with regard to the oxygen sensor shown in FIG. 1 as well, various changes and modifications in design may be made as long as functions as the oxygen sensor and the above-described oxygen supply pathways are provided.

Also, the electrochemical oxygen sensor of the present invention may also take the form of a potentiostatic type oxygen sensor. The potentiostatic type oxygen sensor is a sensor configured such that a constant voltage is applied between a positive electrode and a negative electrode, and the voltage to be applied is set depending on the electrochemical characteristics of the respective electrodes and the type of gas to be detected. In the potentiostatic type oxygen sensor, a current that flows between the positive electrode and the negative electrode when an appropriate constant voltage is applied therebetween is proportional to the oxygen gas concentration. Thus, by converting the current to a voltage, it becomes possible to detect the oxygen gas concentration in an unknown gas by measuring the voltage, similarly to the case of a galvanic cell type oxygen sensor.

### Examples

Hereinafter, the present invention will be described more specifically with reference to examples. However, the following examples do not limit the present invention.

### (Example 1)

### <Preparation of electrolyte solution>

An aqueous solution for an electrolyte solution was prepared by dissolving citric acid, tripotassium citrate, and ammonia in water. Note that the molar concentration of citric acid was 2.5 mol/L, the molar concentration of tripotassium citrate was 0.5 mol/L, and the molar concentration of ammonia was 3.0 mol/L, in the aqueous solution. The pH of the aqueous solution was 4.30 at 25°C. Then, 100 parts by mass of the aqueous solution was mixed with 2 parts by mass of acrylamide-sodium acrylate copolymer "SANFLOC AH-200P (product name)" available from Sanyo Chemical Industries, Ltd., as a thickener to prepare an electrolyte solution containing the thickener at a ratio of 2.0% by mass.

### <Assembling of oxygen sensor>

5.4 g of the electrolyte solution was injected into the container main body 21 made of ABS resin, and a galvanic cell type oxygen sensor having the configuration shown in FIG. 1 was assembled. Similarly to the container main body 21, the sealing lid 10 (the first sealing lid 11 and the second sealing lid 12) were also formed using ABS resin. Also, a porous polytetrafluoroethylene sheet was used as the protective film 40, and a tetrafluoroethylene-hexafluoropropylene copolymer film was used as the barrier membrane 60.

The catalyst layer (catalytic electrode) 51 of the positive electrode 50 was made of gold, the positive electrode current collector 52 made of titanium and the lead wire 53 made of titanium were welded together into a single body. Also, the negative electrode 80 was made of a Sn-Sb alloy (Sb content: 5% by mass).

Further, the correction resistor 100 and the temperature compensation thermistor 110 were connected in series between the lead wire 53 of the positive electrode and the lead portion 81 of the negative electrode, and the positive electrode terminal 54 was led out from the lead wire 53 of the positive electrode and the negative electrode terminal 81 was led out from the lead portion 81 of the negative electrode to the outside of the container main body 21, thus making it possible to detect an oxygen concentration based on an output voltage.

### (Example 2)

A galvanic cell type oxygen sensor was produced in the same manner as in Example 1, except that the thickener for the electrolyte solution was changed to sodium polyacrylate "DK500B (product name)" (available from Sanyo Chemical Industries, Ltd.).

### (Example 3)

A galvanic cell type oxygen sensor was produced in the same manner as in Example 1, except that the thickener for the electrolyte solution was changed to carboxymethyl cellulose.

### (Comparative Example 1)

A galvanic cell type oxygen sensor was produced in the same manner as in Example 1, except that no thickener was added and the aqueous solution for an electrolyte solution was used as is as the electrolyte solution.

### (Comparative Example 2)

A galvanic cell type oxygen sensor was produced in the same manner as in Example 1, except that the thickener for the electrolyte solution was changed to glucomannan "RHEOLEX (product name)" (available from Shimizu Chemical Corporation).

An accelerated test was performed in which by passing oxygen gas at a concentration of 100% through each of the oxygen sensors produced in Examples 1 to 3 and Comparative Examples 1 and 2 in an atmosphere at a temperature of 40°C, an electrochemical reaction was accelerated and proceeded. Electrochemical reactions at 40°C proceed about twice as fast as those at room temperature. Also, electrochemical reactions when oxygen gas at a concentration of 100% is passed through the oxygen sensor proceed about 5 times as fast as in the air. Accordingly, when oxygen gas at a concentration of 100% is passed through an oxygen sensor at a temperature of 40°C, the oxygen sensors can change over time about 10 times faster than in the case where they are left at room temperature in the air.

In this test, the following evaluation was carried out on the oxygen sensors at 0 years (at the start of the test), 1 year, 3 years, and 5 years after they had been left at room temperature (equivalent value), calculated by multiplying a period of time during which each oxygen sensor was kept at 40°C by 10.

### [Evaluation of vibration resistance]

In an atmosphere at room temperature, a vibration test in which the oxygen sensor was rotated 270 degrees vertically per second and this operation was repeated 10 times was conducted, and a change in output voltage during the vibration test was measured, and the vibration resistance was evaluated from the difference between the maximum and minimum voltage values (output voltage fluctuation). The results are shown in Table 1.

**[Table 1]**

| | Output voltage fluctuation (mV) | | | |
|---|---|---|---|---|
| | At start of test | After 1 year | After 3 years | After 5 years |
| Ex. 1 | < 0.1 | < 0.1 | < 0.1 | < 0.1 |
| Ex. 2 | < 0.1 | < 0.1 | < 0.1 | < 0.1 |
| Ex. 3 | < 0.1 | < 0.1 | < 0.1 | < 0.1 |
| Comp. Ex. 1 | < 0.1 | 0.2 | 1.0 | 2.5 |
| Comp. Ex. 2 | < 0.1 | < 0.1 | < 0.1 | < 0.1 |

As shown in Table 1, in the oxygen sensors of Examples 1 to 3 and Comparative Example 2, in which the electrolyte solutions thickened with the thickeners were used, fluctuations in output voltage in any vibration test were suppressed for a long period of time. On the other hand, in the oxygen sensor of Comparative Example 1, in which no thickener was added to the electrolyte solution, fluctuations in output voltage increased as the accelerated test proceeded.

### [Evaluation of output voltage maintainability]

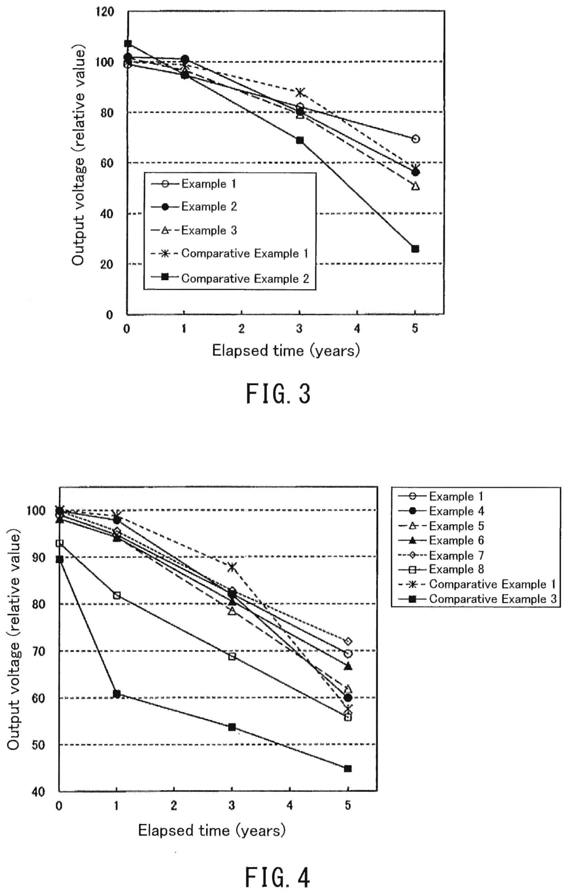

The output voltage of each of the oxygen sensors of Examples 1 to 3 and Comparative Examples 1 and 2 during the accelerated test was measured, and the output voltage maintainability was evaluated from a change in the output voltage. FIG. 3 shows the change in the output voltage of each oxygen sensor, presuming that the output voltage of the oxygen sensor of Comparative Example 1 at the start of the test was 100.

As shown in FIG. 3, in the oxygen sensors of Examples 1 to 3, in which the electrolyte solutions thickened with water-soluble thickeners each made of a semi-synthetic polymer or a synthetic polymer, a decrease in output voltage due to the thickener being added was smaller, and a favorable output voltage was maintained for a long period of time, compared to the oxygen sensor of Comparative Example 2, in which the electrolyte solution thickened with a natural polysaccharide was used. In particular, in the oxygen sensor of Example 1, in which the electrolyte solution thickened with the acrylamide-sodium acrylate copolymer as the thickener was used, a change in the output voltage over time was small, and the output voltage maintainability was superior.

### Examples 4 to 8 and Comparative Example 3

Oxygen sensors that contained the thickeners in the electrolyte solutions at a concentration of 0.2% by mass (Example 4), 0.5% by mass (Example 5), 1.0% by mass (Example 6), 1.5% by mass (Example 7), 2.9% by mass (Example 8), and 4.8% by mass (Comparative Example 3), respectively, were produced in the same manner as in Example 1, except that the thickener content was 0.2 parts by mass (Example 4), 0.5 parts by mass (Example 5), 1 part by mass (Example 6), 1.5 parts by mass (Example 7), 3 parts by mass (Example 8), and 5 parts by mass (Comparative Example 3), with respect to 100 parts by mass of the aqueous solution for an electrolyte solution.

The oxygen sensors of Examples 4 to 8 and Comparative Examples 3 were subjected to the same accelerated test as above and the vibration resistance and the output voltage maintainability were evaluated. The results of the evaluation of the vibration resistance are shown in Table 2 together with the results of Comparative Example 1.

**[Table 2]**

| | Output voltage fluctuation (mV) | | | |
|---|---|---|---|---|
| | At start of test | After 1 year | After 3 years | After 5 years |
| Ex. 4 | < 0.1 | < 0.1 | 0.5 | 1.5 |
| Ex. 5 | < 0.1 | < 0.1 | 0.3 | 0.4 |
| Ex. 6 | < 0.1 | < 0.1 | 0.15 | 0.15 |
| Ex. 7 | < 0.1 | < 0.1 | < 0.1 | < 0.1 |
| Ex. 8 | < 0.1 | < 0.1 | < 0.1 | < 0.1 |
| Comp. Ex. 1 | < 0.1 | 0.2 | 1.0 | 2.5 |
| Comp. Ex. 3 | < 0.1 | < 0.1 | < 0.1 | < 0.1 |

As shown in Table 2, even in the oxygen sensor of Example 4, in which the electrolyte solution with a thickener content of only 0.2% by mass was used, the vibration resistance was improved, compared to the oxygen sensor of Comparative Example 1. As the thickener content increased, vibration resistance was further improved, and particularly excellent vibration resistance was achieved when the thickener content was 1.5% by mass or more.

The results of the evaluation of the output voltage maintainability are shown in FIG. 4 together with the results of Example 1 and Comparative Example 1.

As shown in FIG. 4, in the oxygen sensors of Examples 1 and 4 to 7, in which the electrolyte solutions with a thickener content in a range of 0.1% by mass to 4% by mass were used, a decrease in output voltage due to the thickener being added was small, and a favorable output voltage was maintained for a long period of time. Further, in the oxygen sensor of Example 8, in which the electrolyte solution with a higher thickener content than the other examples was used, like the other examples, a favorable output voltage was maintained for a long period of time, although a decrease in output voltage was slightly large. On the other hand, in the oxygen sensor of Comparative Example 3, in which the electrolyte solution with an excessively high thickener content was used, a decrease in output voltage caused by the influence of the thickener was greater than in the oxygen sensors of the examples.

In particular, in the oxygen sensors of Examples 1, 6, and 7, in which the electrolyte solutions with a thickener content of 1.0% by mass to 2.0% by mass were used, a change in the output voltage over time was small, and the output voltage maintainability was superior.

The invention may be embodied in other forms without departing from the essential characteristics thereof. The embodiments disclosed in this application are to be considered in all respects as illustrative and not limiting. The scope of the present invention should be construed in view of the appended claims, rather than the foregoing description, and all changes that come within the meaning and range of equivalency of the claims are intended to be embraced therein.

### Industrial Applicability

The electrochemical oxygen sensor according to the present invention can be applied to the same applications as those for conventionally known electrochemical oxygen sensors, and are particularly useful for applications requiring measurements under vibrating conditions since the electrochemical oxygen sensor according to the present invention has favorable vibration resistance.

### Description of Reference Numerals

- 1, 100: Electrochemical oxygen sensor
- 10: Sealing lid
- 11: First sealing lid (inner lid)
- 12: Second sealing lid (outer lid)
- 20: Container
- 21: Container main body
- 30: O-ring
- 40: Protective film
- 50: Positive electrode
- 51: Positive electrode body (catalytic electrode)
- 52: Positive electrode current collector
- 53: Lead wire of positive electrode
- 54: Positive electrode terminal
- 60: Barrier membrane
- 70: Bore for lead wire
- 80: Negative electrode
- 81: Lead portion of negative electrode
- 82: Negative electrode terminal
- 90: Electrolyte solution
- 100: Correction resistor
- 110: Temperature compensation thermistor
- 120: Through hole

## Claims

1. An electrochemical oxygen sensor comprising:
a positive electrode;
a negative electrode;
an electrolyte solution constituted by an aqueous solution containing an electrolyte; and
an exterior body accommodating the positive electrode, the negative electrode, and the electrolyte solution,
wherein the electrolyte solution contains a water-soluble thickener made of a semi-synthetic polymer or a synthetic polymer at a concentration of 0.1% by mass or more and 4% by mass or less.

2. The electrochemical oxygen sensor according to claim 1, comprising
a polymer containing a constitutional unit represented by a formula (1) below as the thickener, 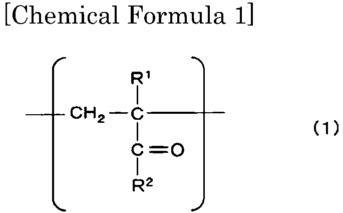 in the formula (1), R¹ represents H or CH₃, R² represents OH, OM, or NH₂, and the M is an alkali metal element.

3. The electrochemical oxygen sensor according to claim 2,
wherein the electrolyte solution contains an acrylamide copolymer as the thickener.

4. The electrochemical oxygen sensor according to claim 3,
wherein the acrylamide polymer is a copolymer of acrylamide and an alkali metal salt of acrylic acid.
